# EUROPÄISCHE PATENTANMELDUNG

(11) **EP 1 420 213 A2**
(43) Veröffentlichungstag der Anmeldung: **19.05.2004**
(21) Anmeldenummer: 03021885.3
(22) Anmeldetag: 27.09.2003
(51) Int. Cl.: F24F 3/16, F24F 6/12

(54) **Heilklimagerät**

(30) Priorität: 14.11.2002 DE 10253842
(71) Anmelder: Quality Health Group AG, 9050 Appenzell (CH)
(72) Erfinder: Reiner, Annick, 71120 Grafenau (DE); Girrbach, Miriam, 73337 Enzklösterle (DE)
(74) Vertreter: Brisch, Georg

(57) **Zusammenfassung**

Die Erfindung betrifft ein Heilklimagerät mit einem Gehäuse (1;31;41), das einen Wasservorratsbehälter (2) umfasst, aus dem eine Einrichtung (17) zum Anreichern der Luft mit Wasser gespeist wird, um einen feuchten Luftstrom zu erzeugen, der insbesondere mit Hilfe eines Gebläses durch das Gehäuse gefördert wird, und mit einer Ionisierungseinrichtung (18) zur Abgabe von Ionen. Es zeichnet sich dadurch aus, dass die Ionisierungseinrichtung (18) so ausgebildet und angeordnet ist, dass die von der Ionisierungseinrichtung abgegebenen Ionen dem Luftstrom zugeführt werden.

## Beschreibung

Die Erfindung betrifft ein Heilklimagerät mit einem Gehäuse, das einen Wasservorratsbehälter umfasst, aus dem eine Einrichtung zum Anreichern der Luft mit Wasser gespeist wird, um einen feuchten Luftstrom zu erzeugen, der insbesondere mit Hilfe eines Gebläses durch das Gehäuse gefördert wird, und mit einer Ionisierungseinrichtung zur Abgabe von Ionen.

Aus der deutschen Offenlegungsschrift DE 100 54 562 A1 ist ein Heilklimagerät mit einem Gehäuse bekannt, in dem eine Ionisierungseinrichtung angeordnet ist. Die Ionisierungseinrichtung ist in einem separaten Aufnahmeraum für elektronische Bauteile in dem Gehäuse angeordnet. Die Offenlegungsschrift enthält keine Hinweise darauf, wohin die von der Ionisierungseinrichtung erzeugten Ionen abgegeben werden.

Aufgabe der Erfindung ist es, ein Heilklimagerät der eingangs geschilderten Art bereitzustellen, das ein besseres Klima schafft als herkömmliche Geräte.

Die Aufgabe wird durch ein Heilklimagerät gelöst, das die Merkmale des Patentanspruchs 1 aufweist. Bevorzugte Ausführungsbeispiele des Heilklimageräts sind in den Unteransprüchen offenbart.

Das Heilklimagerät weist ein Gehäuse auf, das einen Wasservorratsbehälter umfasst. Der Wasservorratsbehälter kann als separates Bauteil ausgebildet sein, er kann aber auch in das Gehäuse integriert sein. Der Wasservorratsbehälter dient zur Aufnahme von Wasser, das wiederum zum Anreichern des Luftstroms mit Wasser verwendet wird. Es können zum Beispiel Wassertropfen in einem Wasserverteilerrohr gebildet werden, das über eine Pumpe mit Wasser aus dem Wasservorratsbehälter versorgt wird und in dessen Unterseite mehrere Wasserdurchtrittsöffnungen vorgesehen sind. Es können aber auch andere Verdunstungs- oder Vernebelungseinrichtungen verwendet werden, um den Luftstrom mit Wasser anzureichern. Das Wasser wird in dem durch das Gehäuse geförderten Luftstrom vernebelt. Das resultierende Aerosol/Luft-Gemisch wird aus dem Gehäuse in die Umgebung gefördert. In der Ionisierungseinrichtung werden insbesondere negative Ionen gebildet. Diese Ionen werden dem durch das Gehäuse geförderten Luftstrom zugeführt. Die dem Luftstrom zugeführten Ionen dienen einerseits zum Reinigen des Luftstroms. Andererseits wird ein Teil der Ionen auch mit dem Luftstrom aus dem Gehäuse heraus in die Umgebung gefördert und entfaltet dort seine Reinigungswirkung.

Ein bevorzugtes Ausführungsbeispiel des Heilklimageräts ist dadurch gekennzeichnet, dass die Ionisierungseinrichtung in dem Gehäuse angeordnet ist. Das liefert den Vorteil, dass die Ionisierungseinrichtung vor unerwünschten Zugriffen von außen geschützt ist.

Ein weiteres bevorzugtes Ausführungsbeispiel des Heilklimageräts ist dadurch gekennzeichnet, dass mindestens eine Ionenabgabeeinrichtung in dem Gehäuse im Bereich des Luftstroms angeordnet ist. Dadurch wird gewährleistet, dass die abgegebenen Ionen in den durch das Gehäuse geführten Luftstrom gelangen.

Ein weiteres bevorzugtes Ausführungsbeispiel des Heilklimageräts ist dadurch gekennzeichnet, dass die Ionenabgabeeinrichtung in einem Luftführungskanal angeordnet ist. Dadurch wird sichergestellt, dass die abgegebenen Ionen nur dem durch das Gehäuse geführten Luftstrom zugeführt werden.

Ein weiteres bevorzugtes Ausführungsbeispiel des Heilklimageräts ist dadurch gekennzeichnet, dass mindestens ein mit der Ionisierungseinrichtung in Verbindung stehendes Ionenabgabeelement außen an dem Gehäuse angeordnet ist. Das Freisetzen der Ionen außerhalb des Gehäuses liefert den Vorteil einer verstärkten Luftreinigungswirkung.

Ein weiteres bevorzugtes Ausführungsbeispiel ist dadurch gekennzeichnet, dass das Ionenabgabeelement so außen an dem Gehäuse angebracht ist, dass der durch das Gehäuse geförderte Luftstrom außerhalb des Gehäuses mit insbesondere negativen Ionen beaufschlagt wird. Dadurch wird einerseits eine zusätzliche Reinigung des Luftstroms sichergestellt. Darüber hinaus werden die Ionen durch den Luftstrom in der Umgebung verteilt.

Ein weiteres bevorzugtes Ausführungsbeispiel des Heilklimageräts ist dadurch gekennzeichnet, dass das Ionenabgabeelement im Bereich mindestens einer Austrittsöffnung für den Luftstrom aus dem Gehäuse angeordnet ist. Das Ionenabgabeelement ist vorzugsweise direkt am Rand der Austrittsöffnung angeordnet. Dadurch wird sichergestellt, dass ein erheblicher Teil der erzeugten Ionen in den Luftstrom gelangt.

Ein weiteres bevorzugtes Ausführungsbeispiel des Heilklimageräts ist dadurch gekennzeichnet, dass das Ionenabgabeelement oberhalb der Austrittsöffnung für den Luftstrom aus dem Gehäuse angeordnet ist. Mit dieser Anordnung wurden bei im Rahmen der vorliegenden Erfindung durchgeführten Untersuchungen die besten Ergebnisse erzielt.

Ein weiteres bevorzugtes Ausführungsbeispiel des Heilklimageräts ist dadurch gekennzeichnet, dass die Ionisierungseinrichtung oberhalb des Wasservorratsbehälters angeordnet ist. Dadurch wird sicher verhindert, dass die Ionisierungseinrichtung. mit aus dem Wasservorratsbehälter austretendem Wasser in Kontakt kommen kann.

Ein weiteres bevorzugtes Ausführungsbeispiel des Heilklimageräts ist dadurch gekennzeichnet, dass zwischen der Ionisierungseinrichtung und dem Wasservorratsbehälter ein Zwischenboden angeordnet ist. Der Zwischenboden schließt den Wasservorratsbehälter nach oben ab und schützt die Ionisierungseinrichtung vor aus dem Wasservorratsbehälter herausschwappendem Wasser.

Ein weiteres bevorzugtes Ausführungsbeispiel des Heilklimageräts ist dadurch gekennzeichnet, dass zwischen dem Wasservorratsbehälter und dem Zwischenboden eine Strahlungseinrichtung angeordnet ist. Die Strahlungseinrichtung gibt vorzugsweise UV-C-Strahlung ab, die dazu dient, im Wasser eventuell vorhandene Keime oder Bakterien abzutöten.

Ein weiteres bevorzugtes Ausführungsbeispiel des Heilklimageräts ist dadurch gekennzeichnet, dass in dem Zwischenboden eine Aussparung zur Aufnahme der Strahlungseinrichtung vorgesehen ist. Statt einer Aussparung kann auch eine entsprechende Mulde für die Strahlungseinrichtung in dem Zwischenboden vorgesehen sein.

Ein weiteres bevorzugtes Ausführungsbeispiel des Heilklimageräts ist dadurch gekennzeichnet, dass auf der dem Wasservorratsbehälter abgewandten Seite der Strahlungseinrichtung eine Abdeckung vorgesehen ist. Der strahlungsabgebende Teil der Strahlungseinrichtung ist auf der dem Wasservorratsbehälter zugewandten Seite angeordnet. Die elektrischen Anschlüsse der Strahlungseinrichtung sind auf der entgegengesetzten Seite der Abdeckung angeordnet, um zu verhindern, dass die elektrischen Anschlüsse mit Wasser in Kontakt kommen.

Ein weiteres bevorzugtes Ausführungsbeispiel des Heilklimageräts ist dadurch gekennzeichnet, dass die Abdeckung einstückig mit dem Zwischenboden ausgebildet ist. Das hat sich unter fertigungstechnischen Gesichtspunkten als besonders vorteilhaft erwiesen.

Ein weiteres bevorzugtes Ausführungsbeispiel des Heilklimageräts ist dadurch gekennzeichnet, dass der Zwischenboden als Spritzgussteil aus Kunststoff gebildet ist. Dadurch wird eine besonders kostengünstige Herstellung des Heilklimageräts gewährleistet.

Weitere Vorteile, Merkmale und Einzelheiten der Erfindung ergeben sich aus der nachfolgenden Beschreibung, in der unter Bezugnahme auf die Zeichnung ein Ausführungsbeispiel im Einzelnen beschrieben ist. Es zeigen:
- Figur 1: eine schematische Darstellung eines Heilklimageräts im geöffneten Zustand von vorne;
- Figur 2: das Heilklimagerät aus Figur 1 im geschlossenen Zustand;
- Figur 3: einen Teilschnitt durch ein Heilklimagerät gemäß einer weiteren Ausführungsform und
- Figur 4: eine Vorderansicht eines Heilklimageräts gemäß einer weiteren Ausführungsform.

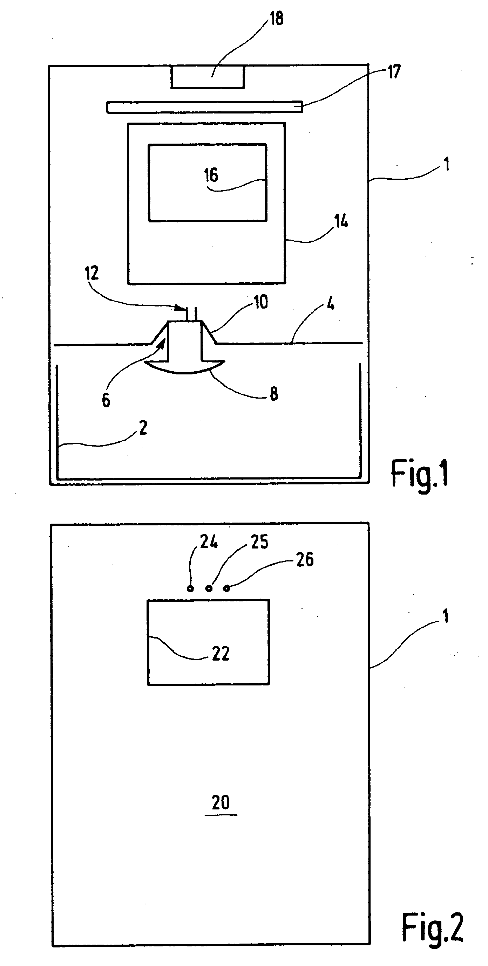

In Figur 1 ist ein Gehäuse insgesamt mit 1 bezeichnet. Das Gehäuse 1 kann beispielsweise aus Metall oder aus Kunststoff gebildet sein. In Figur 1 ist die vordere Wand des Gehäuses 1 nicht dargestellt, um das Innere des Gehäuses 1 sichtbar zu machen. Im unteren Bereich des Gehäuses 1 ist ein Wasservorratsbehälter 2 angeordnet. Der Wasservorratsbehälter 2 ist nach oben hin durch einen Zwischenboden 4 begrenzt.

In dem Zwischenboden 4 ist eine Aussparung 6 vorgesehen, durch die der Sockel eines UV-C-Strahlers 8 ragt. Der Sockel des Strahlers 8 ist an einer Abdeckung 10 befestigt, die einstückig mit dem Zwischenboden 4 ausgebildet ist. Die Anschlüsse 12 des Strahlers 8 ragen durch die Abdeckung 10 hindurch. Durch die Abdeckung 10 ist sichergestellt, dass kein Wasser aus dem Vorratsbehälter 2 zu den Anschlüssen 12 des Strahlers 8 gelangen kann.

Oberhalb des Zwischenbodens 4 ist ein Ventilatorgehäuse 14 vorgesehen. In dem Ventilatorgehäuse 14 ist ein (nicht dargestellter) Ventilator angeordnet, der Luft aus der Umgebung durch die Rückwand des Gehäuses zu einer Austrittsöffnung 16 des Ventilatorgehäuses 14 fördert.

Oberhalb des Ventilatorgehäuses 14 ist eine Vorrichtung 17 zur Bildung von Wassertropfen angeordnet. Die Vorrichtung 17 steht über eine (nicht dargestellte) Leitung mit einer (ebenfalls nicht dargestellten) Pumpe in Verbindung, die dazu dient, Wasser aus dem Vorratsbehälter 2 zu der Vorrichtung 17 zu fördern.

Oberhalb der Vorrichtung 17 zur Bildung von Wassertropfen ist eine Ionisierungseinrichtung 18 angeordnet. Die Ionisierungseinrichtung 18 dient dazu, negative Ionen zu erzeugen.

In Figur 2 ist das Gehäuse 1 durch eine vordere Gehäusewand 20 geschlossen. In der vorderen Gehäusewand 20 ist eine Austrittsöffnung 22 ausgespart. Der mit Hilfe des Ventilators durch das Gehäuse 1 geförderte Luftstrom wird mit Hilfe der Vorrichtung 17 mit Wassertropfen angereichert und tritt durch die Austrittsöffnung 22 aus dem Gehäuse 1 aus. Die Vorrichtung 17 dient dazu, den Luftstrom zu befeuchten. Die Befeuchtung des Luftstroms kann aber auch auf andere Art und Weise, zum Beispiel durch ein mit Wasser getränktes Vlies, erfolgen, das von dem Luftstrom durchströmt wird.

Oberhalb der Austrittsöffnung 22 sind in der vorderen Gehäusewand 20 drei Ionenabgabeelemente 24, 25 und 26 gleichmäßig beabstandet auf einer Linie angeordnet. Die Ionenabgabeelemente 24 bis 26 haben nadelartige Körper, deren Spitzen zur Umgebung gerichtet sind. Aus diesen Spitzen treten die in der Ionisierungseinrichtung 18 erzeugten Ionen aus.

Die von den Ionenabgabeelementen 24 bis 26 abgegebenen negativen Ionen gelangen in den aus der Austrittsöffnung 22 austretenden Luftstrom. Die Ionenabgabeelemente können auch in dem Gehäuse angeordnet sein. Entscheidend ist, dass die Ionen dem Luftstrom beziehungsweise Luft-Nebelstrom zugeführt werden.

Der UV-C-Strahler 8 ist so oberhalb des Wasservorratsbehälters 2 angeordnet, dass die gesamte Wasseroberfläche bestrahlt werden kann, um in dem Wasser eventuell enthaltene Keime oder Bakterien abzutöten. Statt einem Strahler 8 können auch mehrere Strahler oberhalb der Wasseroberfläche angeordnet sein.

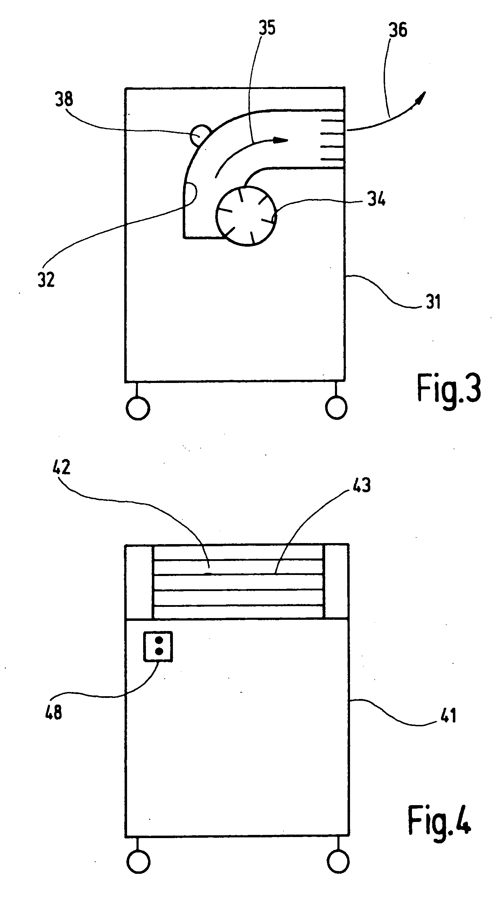

In Figur 3 ist ein Heilklimagerät teilweise im Schnitt dargestellt. Das Heilklimagerät umfasst ein Gehäuse 31, in welchem ein Luftführungskanal 32 angeordnet ist. Der Luftführungskanal 32 wird durch eine (nicht dargestellte) Einrichtung mit feuchter Luft gespeist, die mit Hilfe eines Gebläses 34 durch den Luftführungskanal 32 aus dem Gehäuse 31 heraus gefördert wird, wie durch Pfeile 35 und 36 angedeutet ist. Eine Ionenabgabeeinrichtung 38, die mit einer (nicht dargestellten) Ionisierungseinrichtung in Verbindung steht, ist in dem Luftführungskanal 32 angeordnet. Die Ionenabgabeeinrichtung 38 dient dazu, Ionen an den durch den Luftführungskanal 32 geführten Luftstrom abzugeben.

In Figur 4 ist eine Vorderansicht eines Heilklimageräts dargestellt, wobei es sich um das in Figur 3 dargestellte Heilklimagerät handeln kann. Da es sich aber auch um ein anderes Heilklimagerät handeln kann, werden zur Bezeichnung gleicher Teile nicht die gleichen Bezugszeichen verwendet. Das in Figur 4 dargestellte Heilklimagerät umfasst ein Gehäuse 41, das eine Luftaustrittsöffnung 42 aufweist, die wiederum durch ein luftdurchlässiges Gitter 43 teilweise abgedeckt ist. Im Bereich der Luftaustrittsöffnung 42 ist eine Ionenabgabeeinrichtung 48 angeordnet. Die Ionenabgabeeinrichtung 48 ist mit einer Ionisierungseinrichtung im Inneren des Gehäuses 41 verbunden. Die Ionenabgabeeinrichtung 48 dient dazu, dem aus der Luftaustrittsöffnung 42 austretenden Luftstrom Ionen zuzuführen. Im Inneren des Gehäuses 41 kann eine weitere (nicht dargestellte) Ionenabgabeeinrichtung angeordnet sein, wie es zum Beispiel bei dem in Figur 3 dargestellten Ausführungsbeispiel gezeigt ist.

## Patentansprüche

1. Heilklimagerät mit einem Gehäuse (1;31;41), das einen Wasservorratsbehälter (2) umfasst, aus dem eine Einrichtung (17) zum Anreichern der Luft mit Wasser gespeist wird, um einen feuchten Luftstrom zu erzeugen, der insbesondere mit Hilfe eines Gebläses durch das Gehäuse (1;31;41) gefördert wird, und mit einer Ionisierungseinrichtung (18) zur Abgabe von Ionen, **dadurch gekennzeichnet, dass** die Ionisierungseinrichtung so ausgebildet und angeordnet ist, dass die von der Ionisierungseinrichtung abgegebenen Ionen dem Luftstrom zugeführt werden.

2. Heilklimagerät nach Anspruch 1, **dadurch gekennzeichnet, dass** die Ionisierungseinrichtung (18) in dem Gehäuse (1) angeordnet ist.

3. Heilklimagerät nach einem der vorhergehenden Ansprüche, **dadurch gekennzeichnet, dass** mindestens eine Ionenabgabeeinrichtung (38) in dem Gehäuse (31) im Bereich des Luftstroms angeordnet ist.

4. Heilklimagerät nach Anspruch 3, **dadurch gekennzeichnet, dass** die Ionenabgabeeinrichtung (38) in einem Luftführungskanal (32) angeordnet ist.

5. Heilklimagerät nach einem der vorhergehenden Ansprüche, **dadurch gekennzeichnet, dass** mindestens ein mit einer Ionisierungseinrichtung (18) in Verbindung stehendes Ionenabgabeelement (24 bis 26;48) außen an dem Gehäuse angeordnet ist.

6. Heilklimagerät nach Anspruch 5, **dadurch gekennzeichnet, dass** das Ionenabgabeelement (24 bis 26;48) so außen an dem Gehäuse (1) angebracht ist, dass der durch das Gehäuse (1) geförderte Luftstrom außerhalb des Gehäuses (1) mit insbesondere negativen Ionen beaufschlagt wird.

7. Heilklimagerät nach Anspruch 5, **dadurch gekennzeichnet, dass** das Ionenabgabeelement (24 bis 26) im Bereich einer Austrittsöffnung (22) für den Luftstrom aus dem Gehäuse (1) angeordnet ist.

8. Heilklimagerät nach Anspruch 6, **dadurch gekennzeichnet, dass** das Ionenabgabeelement (24 bis 26) oberhalb der Austrittsöffnung (22) für den Luftstrom aus dem Gehäuse (1) angeordnet ist.

9. Heilklimagerät nach einem der vorhergehenden Ansprüche, **dadurch gekennzeichnet, dass** die Ionisierungseinrichtung (18) oberhalb des Wasservorratsbehälters (2) angeordnet ist.

10. Heilklimagerät nach Anspruch 9, **dadurch gekennzeichnet, dass** zwischen der Ionisierungseinrichtung (18) und dem Wasservorratsbehälter (2) ein Zwischenboden (4) angeordnet ist.

11. Heilklimagerät nach Anspruch 10, **dadurch gekennzeichnet, dass** zwischen dem Wasservorratsbehälter (2) und dem Zwischenboden (4) eine Strahlungseinrichtung (8) angeordnet ist.

12. Heilklimagerät nach Anspruch 11, **dadurch gekennzeichnet, dass** in dem Zwischenboden (4) eine Aussparung (6) zur Aufnahme der Strahlungseinrichtung (8) vorgesehen ist.

13. Heilklimagerät nach Anspruch 12, **dadurch gekennzeichnet, dass** auf der dem Wasservorratsbehälter (2) abgewandten Seite der Strahlungseinrichtung (8) eine Abdeckung (10) vorgesehen ist.

14. Heilklimagerät nach Anspruch 13, **dadurch gekennzeichnet, dass** die Abdeckung (10) einstückig mit dem Zwischenboden (4) ausgebildet ist.

15. Heilklimagerät nach einem der Ansprüche 10 bis 14, **dadurch gekennzeichnet, dass** der Zwischenboden (4) als Spritzgussteil aus Kunststoff gebildet ist.
